# FASCICULE DE BREVET EUROPEEN

(11) **EP 2 168 402 B1**
(45) Date de publication et mention de la délivrance du brevet: **05.09.2018**
(21) Numéro de dépôt: 08826515.2
(22) Date de dépôt: 17.07.2008
(51) Int. Cl.: H04W 12/08, H04W 4/02, H04L 29/08, H04W 88/02

(54) **APPROPRIATION DYNAMIQUE D'AU MOINS UN EQUIPEMENT MULTIMEDIA LORS D'UNE MISE EN COMMUNICATION**
DYNAMISCHE VERWENDUNG MINDESTENS EINES MULTIMEDIA-GERÄTES WÄHREND EINES KOMMUNIKATIONSAUFBAUS
DYNAMIC APPROPRIATION OF AT LEAST ONE MULTIMEDIA DEVICE DURING COMMUNICATION ESTABLISHMENT

(30) Priorité: 17.07.2007 FR 0756542
(43) Date de publication de la demande: 31.03.2010
(73) Titulaire: Orange, 75015 Paris (FR)
(72) Inventeur: PETION, Romaric, F-22560 Trebeurden (FR); VILLEY, Jean-Christian, F-22560 Pleumeur Bodou (FR); MARJOU, Xavier, F-22300 Lannion (FR); TRONET, Sarah, F-22300 Lannion (FR)
(86) Numéro de dépôt international: PCT/FR2008/051351
(87) Numéro de publication internationale: WO 2009/013438

(56) Documents cités:
- EP-A- 1 545 139
- US-A1- 2005 271 011

## Description

L'invention concerne l'utilisation d'équipements multimédia à disposition des utilisateurs.

Les capacités de communication et caractéristiques ergonomiques d'un équipement multimédia sont très variables d'un équipement à l'autre. Celles d'un terminal mobile de téléphonie sont souvent limitées en termes de taille d'écran, de confort d'écoute, de bande passante de communication, etc.

La demande américaine US20050271011 concerne le transfert de réseau vertical (vertical network Hanover en anglais). Elle propose de choisir le chemin de communication en passant éventuellement par un autre équipement ou noeud du réseau (WLAN ou Mobile). La demande américaine US20050271011 proposant donc de changer de point d'accès, la qualité de communication pourra éventuellement être améliorée si les capacités du nouveau point d'accès sont meilleures que les capacités du point d'accès antérieur à condition que le terminal de réception soit compatible avec ces capacités améliorées. Mais cela n'améliore pas le confort de communication de l'utilisateur, ni la qualité de communication dans le cas où le terminal de l'utilisateur n'est pas compatible avec les capacités supérieures du nouveau point d'accès.

Il existe donc un besoin pour améliorer le confort et/ou la qualité de la communication d'un utilisateur utilisant un tel terminal.

L'invention concerne un procédé d'appropriation dynamique d'au moins un deuxième équipement multimédia constituant un deuxième terminal multimédia par un premier équipement constituant un premier terminal aussi nommé terminal utilisateur situé dans une zone géographique dans laquelle se situe ledit au moins un deuxième terminal multimédia, en cas de demande d'établissement d'une communication entre le premier terminal et un troisième terminal, le procédé comportant
- une étape d'établissement d'un premier lien de signalisation entre un serveur et le premier terminal,
- une étape de pilotage des deuxième et troisième terminaux à partir dudit serveur en vue d'un établissement, entre les deuxième et troisième terminaux, d'au moins un premier flux de données utiles, formant une première partie de ladite communication.

Ainsi en fonction de sa localisation géographique, l'utilisateur du premier terminal tire profit de la présence d'un terminal appropriable dans la zone dans laquelle se trouve ce premier terminal afin de disposer des meilleurs terminalterminaux pour exécuter ses applications. Cette appropriation dynamique d'un terminal de communication (visiophone, PC, télé...) permet d'enrichir le confort de l'utilisateur dans son environnement domestique.

Ceci est permis par un découplage entre, d'une part, l'établissement du lien de signalisation avec le premier terminal, et, d'autre part, l'établissement des flux utiles de communication. Les flux utiles de communication sont de ce fait adaptables aux capacités respectives des terminalterminaux entre lesquels ils sont établis, indépendamment des capacités effectives du premier terminal avec lequel la mise en communication est demandée.

Selon un mode de réalisation, le procédé selon l'invention comprend une étape de pilotage des premier et troisième terminalterminaux à partir dudit serveur en vue d'un établissement, entre les premier et troisième terminaux, d'au moins un deuxième flux de données utiles, formant une deuxième partie de ladite communication.

L'utilisation partagée et simultanée de deux terminaux (premier et deuxième terminaux) pour un même utilisateur lors d'une même communication permet d'optimiser la qualité de la communication et le confort pour cet utilisateur.

Selon un mode de réalisation du procédé selon l'invention, le premier lien de signalisation est maintenu pendant ladite communication.

De cette manière, un contrôle de la communication est toujours possible à partir du premier terminal, à travers le lien de signalisation établi avec le serveur, en particulier une reprise de la communication sur le premier terminal.

Ce premier terminal joue en quelque sorte le rôle de dispositif de commande à distance, à travers le serveur, pour les flux établis avec le deuxième terminal multimédia.

Par ailleurs, lorsque le premier terminal sort de la zone géographique, respectivement rentre dans cette zone, le transfert vers le premier terminal, respectivement vers le deuxième terminal multimédia, de flux faisant partie de la communication peut s'effectuer sans délai si ce lien de signalisation est maintenu.

Selon un mode de réalisation du procédé selon l'invention, un identifiant d'terminal est présenté au troisième terminal lors de l'établissement du premier flux de données utiles, cet identifiant étant celui du premier terminal.

L'utilisation d'un deuxième terminal multimédia appropriable lors de la mise en communication s'effectue ainsi de manière transparente pour l'utilisateur du troisième terminal.

Selon une première alternative de réalisation du procédé selon l'invention, ledit au moins un premier flux est établi initialement entre le premier terminal et le troisième terminal, puis transféré entre le deuxième terminal multimédia et le troisième terminal, suite à l'entrée du premier terminal dans ladite zone géographique.

Selon une deuxième alternative de réalisation du procédé selon l'invention, dans lequel ledit au moins un premier flux est établi initialement entre le deuxième terminal multimédia et le troisième terminal, puis transféré entre le premier terminal et le troisième terminal, suite à la sortie du premier terminal dans ladite zone géographique.

Dans ces deux alternatives, le transfert de la communication - vers le premier ou le deuxième terminal multimédia - est contrôlé dynamiquement en fonction de la localisation géographique du premier terminal. L'utilisateur du premier terminal dispose, quel que soit la localisation et ses déplacements, des terminaux les plus appropriés, le serveur pouvant notamment sélectionner, pour chacun des flux utiles à établir, l'terminal le plus performant en termes de capacités de communication et/ou d'ergonomie.

L'invention concerne également un serveur d'application d'appropriation dynamique d'au moins un deuxième équipement multimédia constituant un deuxième terminal multimédia par un premier équipement constituant un premier terminal aussi nommé terminal utilisateur situé dans une zone géographique dans laquelle se situe ledit au moins un deuxième terminal multimédia, en cas de demande d'établissement d'une communication entre le premier terminal et un troisième terminal, le serveur comportant
- des moyens d'établissement d'un premier lien de signalisation entre un serveur et le premier terminal,
- des moyens de pilotage des deuxième et troisième terminaux en vue d'un établissement, entre les deuxième et troisième terminaux, d'au moins un premier flux de données utiles, formant une première partie de ladite communication.

Les avantages énoncés pour le procédé selon l'invention sont transposables directement au serveur selon l'invention.

Selon un mode de réalisation, le serveur selon l'invention comprend des moyens de pilotage des premier et troisième terminaux en vue d'un établissement, entre les premier et troisième terminaux, d'au moins un deuxième flux de données utiles, formant une deuxième partie de ladite communication.

Les caractéristiques et avantages de l'invention apparaîtront plus clairement à la lecture de la description, faite à titre d'exemple, et des figures s'y rapportant.

L'invention est applicable à la mise en oeuvre d'un service de personnalisation d'ambiance au gré de l'utilisateur par appropriation d'équipements, notamment d'équipements collectifs. En dehors de son environnement domestique, l'outil de communication principal de l'utilisateur est, par exemple, son téléphone mobile. L'idée de l'invention est de permettre à l'utilisateur d'un téléphone mobile de bénéficier des capacités multimédias (image et son de haute qualité) et des moyens de communication des terminaux présents dans son environnement domestique et ceci de façon automatique. Dans l'exemple illustrant l'invention, celle-ci d'appuie sur une architecture IMS (Internet Multimedia Service, service multimédia Internet en français). L'idée de ce service est de permettre à un utilisateur d'utiliser des moyens tels que des moyens de communication (téléphone Visio, terminal de projection 3D...) en fonction de sa localisation et de manière intuitive pour cet utilisateur. Notamment, en fonction de la proximité de l'utilisateur de son équipement de communication domestique (visiophone, PC, TV...), le service d'appropriation propose à l'utilisateur d'améliorer son confort au travers de l'accès haut débit de son domicile.

Ce service se décline dans plusieurs environnements, dont l'un public, applicable à la sphère professionnel (un exemple étant le client d'une chaîne d'hôtel qui s'approprierait le terminal de la chambre), l'autre applicable à la sphère grand public (un utilisateur mobile déroutant ses appels mobiles vers son terminal fixe, plus performant).

L'invention utilise un principe d'appropriation d'équipements de communication situés dans une pièce ou un espace défini, c'est-à-dire le pilotage de ces équipements, notamment des moyens de communication de ces équipements. L'utilisateur itinérant porteur d'un terminal mobile, peut ainsi, en entrant dans cette pièce, s'approprier un ou des équipements et profiter avantageusement de moyens de communication supérieurs à ceux de son terminal mobile.

Ainsi, le premier équipement est par exemple un terminal utilisateur et le deuxième équipement est un équipement multimédia fixe ou mobile domestique, public, d'entreprise, etc. et, le au moins un deuxième équipement multimédia est constitué par un ou plusieurs équipements disponibles, c'est à dire qu'un premier équipement peut s'approprier.

Afin de déterminer les équipements dont un terminal d'un utilisateur peut s'approprier, l'invention propose de localiser le terminal, notamment par localisation se basant sur le réseau de radiocommunication local telle que la localisation Wifi.

Dans le cas où une ou au maximum 2 bornes Wifi sont disponibles dans une zone géographique donnée, la localisation Wifi est réduite à sa plus simple expression: il est en effet impossible de faire de la triangulation radio pour localiser un terminal. Dans ce cas, la localisation Wifi consiste à détecter simplement que le terminal mobile de l'utilisateur se trouve à proximité directe d'une borne Wifi du domicile de l'utilisateur, La proximité de la borne Wifi se détecte par le dépassement d'un seuil de puissance des signaux reçus de la borne. Aucune infrastructure réseau spécifique n'est nécessaire.

Par exemple, pour faire de la localisation, le terminal utilisateur détermine la puissance d'émission (en dBm décibel par rapport au milliwatt) d'une borne Wifi, qui n'est pas forcément reliée au réseau domestique. Une valeur de seuil d'entrée dans une zone est définie comme la valeur de la puissance d'émission de la borne Wifi au-dessus de laquelle on pourra considérer qu'un utilisateur se trouve dans la pièce.

Dans une variante, pour palier aux problèmes des variations aléatoires, le terminal de l'utilisateur effectue une moyenne sur quelques valeurs, ainsi cela permettra d'atténuer ces variations et donc d'éviter à l'utilisateur d'être vu hors de la pièce pendant quelques secondes alors qu'il s'y trouve toujours. Un autre seuil de sortie est fixé comme la valeur de seuil inférieur de puissance d'émission en-dessous de laquelle l'utilisateur sera considéré comme étant sorti de la pièce.

Dans une variante de l'invention, une horloge détermine une cadence à laquelle les données de localisation (notamment le nom, l'adresse MAC et les puissances d'émission de toutes les bornes Wifi que le terminal utilisateur peut capter notamment dans le cas d'une localisation par le terminal utilisateur) sont obtenues et enregistrées. De cette manière, est constituée la liste des bornes, utile pour la configuration de l'application (cf. plus bas), ce qui permet d'utiliser une autre borne Wifi pour la localisation de manière très réactive.

Un tableau est utilisé pour chaque borne afin d'y enregistrer les différentes valeurs récupérées. Il est initialisé avec à une valeur initiale par exemple la valeur -94 dBm. A chaque fois que les bornes sont listées, la puissance d'émission sera enregistrée dans une case du tableau. En se déplaçant, l'utilisateur va enregistrer de nouvelles bornes dans le terminal utilisateur, or le terminal n'a pas besoin (utilité et occupation mémoire) des bornes qu'il ne capte plus. Ainsi, dans une variante de l'invention, pour faire ce tri, une variable (initialisée à 1) liée à chaque borne Wifi sera utilisée, pour vérifier si son tableau a été mis à jour récemment. A chaque ajout ou modification d'une valeur du tableau, la valeur de mise à jour sera mise à 1 et passera à 0 après avoir effectué la moyenne du tableau. Si la valeur de mise à jour vaut 0, cela signifie que la valeur du tableau n'a pas été modifiée depuis la dernière moyenne effectuée, c'est à dire que le terminal mobile ne capte pas la borne. Un 0 sera alors placé à l'emplacement qui aurait dû être rempli dans le tableau des puissances. Lorsque toutes les valeurs du tableau sont à 0, cette borne est supprimée de la liste.

Ensuite, la moyenne des valeurs du tableau de la borne Wifi qui sont intéressante pour le terminal est effectuée, et comparée à notre puissance d'entrée et de sortie. Si elle est supérieure à la valeur de seuil d'entrée, alors un serveur d'application d'appropriation devra être averti de l'entrée de l'utilisateur dans la pièce. Si elle est inférieure à la valeur de seuil de sortie, alors le serveur d'application d'appropriation devra être averti de la sortie de l'utilisateur de la pièce. C'est à ce moment qu'il faudra mettre la variable de mise à jour à 0 pour toutes les bornes de la liste.

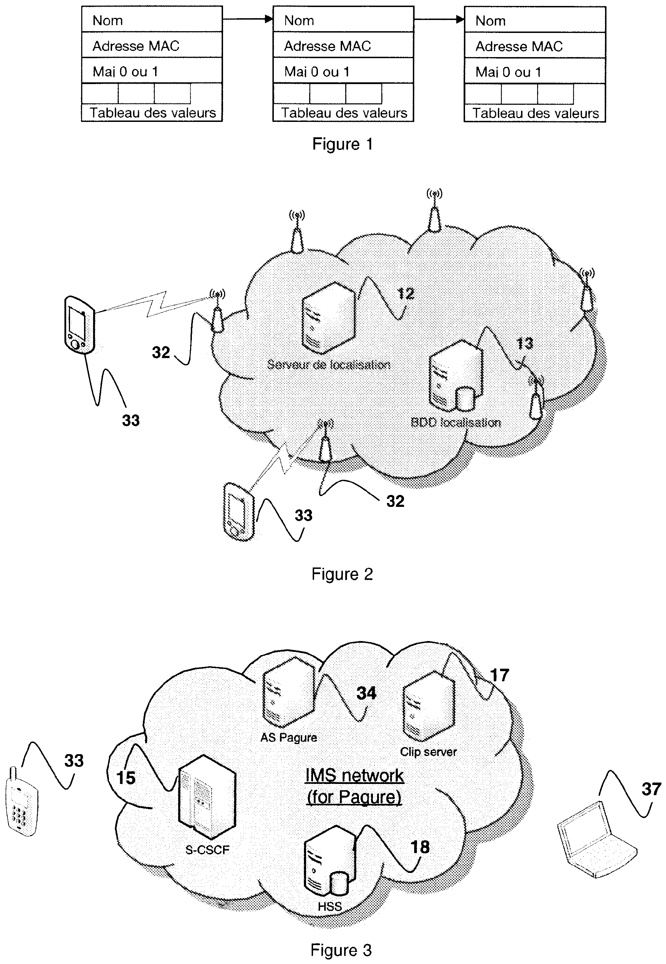

Une structure de données intéressante pour lister les bornes Wifi peut être celle présentée à la figure 1.

Lies étapes mises en oeuvre pour la localisation sont les suivantes:
1. Lister et enregistrer/modifier les bornes Wifi dans la structure de données;
2. Supprimer les bornes dont les valeurs du tableau n'a pas été mis à jour (valeur égale à 0);
3. Effectuer la moyenne du tableau de la borne que l'on aura choisi pour faire notre localisation;
4. Recommencer l'étape 1.

Dans un autre exemple de réalisation de la localisation du terminal mobile 33 de l'utilisateur illustré par la figure 2, un serveur de localisation 12 est utilisé pour localiser un terminal mobile 33 dans une zone afin de lui proposer une appropriation des équipements disponibles dans cette zone. Le support permettant la localisation est dans ce cas un réseau sans-fil de type 802.1. La norme 802.11 permet d'avoir des portées allant de 300 mètres en extérieur et 50 mètres en intérieur et jusqu'à 500 mètres et 150 mètres. Toutefois la norme 802.1 n'est, à l'origine, absolument pas conçue pour être un support de localisation, contrairement au GPS. Mais ce dernier ne fonctionne pas à l'intérieur d'un bâtiment. L'idée est d'utiliser les réseaux sans-fil 802.11 déjà présents dans l'entreprise pour faire de la localisation. L'avantage de cette méthode est de n'induire aucun surcoût infrastructurels si un réseau sans-fil existe déjà. Si ce réseau n'est pas assez étoffé et ne couvre pas suffisamment de surface, l'évolution vers un réseau plus grand est peu coûteuse et aisée.

L'algorithme de localisation utilisé permet, à partir de la liste des niveaux de réception de chaque point d'accès, de localiser un terminal. Le principe général est le suivant :
Le terminal de l'utilisateur émet une liste contenant les points d'accès Wifi accessibles et leurs niveaux de réception respectifs vers le serveur de localisation
Le serveur de localisation reçoit cette liste et utilise son algorithme pour déterminer dans quelle zone se trouve l'utilisateur.

Puis le serveur de localisation met à jour la base de données de localisation.

La finesse de localisation est de l'ordre de la pièce. Lorsque l'on se déplace dans le bâtiment, le système suit les déplacements du client, il détecte les changements de zone correctement. Il existe des différences notables dans les niveaux de réception entre un temps pluvieux et un temps sec que le serveur de localisation peut compenser moyennant une sonde hygrométrique.

L'invention utilise une architecture jouant le rôle de couche logique intermédiaire entre, d'un côté, les terminaux et les réseaux de transport orientés IP et, de l'autre, les services applicatifs d'appropriation d'équipement. Dans l'exemple d'illustration de la **figure 3****,** cette architecture est une architecture IMS jouant le rôle de couche logique avec outre les services applicatifs d'appropriation d'équipement les services applicatifs de télécoms (voix sur IP, *push-to-talk,* messagerie instantanée). Cette architecture met en oeuvre certaines fonctions techniques (mécanismes de contrôle et signalisation) entre différents équipements au coeur d'un réseau d'opérateurs, en recourant, notamment au protocole de signalisation SIP *(Session initiation protocol)* standardisé par l'IETF (l'organe de normalisation technique d'internet). Indépendant de la nature des données transportées, SIP apporte en outre la détection de la présence de l'abonné, que connaissent bien les utilisateurs de messagerie instantanée sur Internet.

En outre, ce protocole permet un découplage entre, d'une part, l'établissement des flux de données utiles (voix, audio, vidéo, données multimédia, ...qui font l'objet de la communication et/ou sont échangés entre les utilisateurs) qui sont échangées entre les équipements lors d'une communication établie entre ces équipements et, d'autre part, l'établissement des flux de signalisation. Il permet notamment le maintien d'un flux de signalisation indépendamment de la présence d'un flux de données utiles correspondant.

Par ailleurs, ce protocole prévoit des mécanismes de déclaration des capacités des terminaux et une détermination dynamique des paramètres de codage et de transmission des données utiles à utiliser lors de l'établissement des flux transportant ces données.

Le service d'appropriation repose sur cette architecture qui comprend les éléments suivants:
- une fonction de contrôleur 15 de session d'appels (S-CSCF pour Serving Call Session Control Function dans le cas de l'IMS). Fonction logique au sein du réseau de nouvelle génération, qui peut être assurée physiquement par différents noeuds d'un réseau tel que le réseau IMS. Centrale, cette fonction englobe un moteur de routage, un gestionnaire de règles qui agit comme couche logique intermédiaire entre, d'un côté, les réseaux d'accès et de transport et, de l'autre, les services et applications;
- un serveur 18 assurant la gestion de l'annuaire des abonnés, leurs profils, et leur authentification lorsqu'ils accèdent au réseau (HSS pour Home Subscriber Server dans l'IMS); ce serveur gère aussi la correspondance entre le nom des personnes et les adresses IP nécessaires pour les joindre;
- un serveur d'application 34 (AS Pagure), comprenant au moins un serveur d'application 34 d'appropriation utilisant le protocole SIP;
- et, dans certains modes de réalisation, un serveur 17 de clip d'accueil: serveur permettant de diffuser un contenu audio/vidéo dans le réseau.

Un équipement est appropriable s'il a été identifié comme appropriable parce que mis à disposition des utilisateurs. En outre, il est référencé comme étant situé dans une zone géographique particulière. Enfin, il est apte à être piloté par le serveur d'application 34, notamment grâce au protocole SIP.

Dans ce cas, le serveur d'application 34 d'appropriation possède une liste de zones géographiques et leurs équipements SIP associés, c'est-à-dire ceux enregistrés comme étant appropriables et situés dans la zone géographique correspondante.

Ces équipements peuvent être de natures différentes: terminal audio, micro, haut-parleurs, terminal Visio, caméra, écran, terminal Visio 3D (capable de gérer 2 flux média), système d'éclairage, système de diffuseur d'odeur, etc.

Le terminal mobile 33 de l'utilisateur est équipé des moyens permettant sa localisation, par exemple de moyens de radiocommunication avec un réseau local, notamment Wifi pour permettre la localisation Wifi, tel qu'un téléphone Wifi, un PDA Wifi, etc. apte à communiquer avec le serveur d'application 34.

L'accès au service d'appropriation peut présupposer une souscription au service. Dans ce cas, l'utilisateur dispose d'un compte valable pour le réseau associé au serveur d'application 34 d'appropriation. Les données du profil associé à ce compte se trouvent stockées dans la base 18 de données HSS de la figure 3. Dans ce profil on y retrouve les informations propres au réseau IMS (nom, prénom, adresse, facturation, ...) ainsi que les informations concernant les services que l'utilisateur a souscrit. Dans une variante du service d'appropriation, l'utilisateur a la possibilité de paramétrer un Clip préféré en indiquant son adresse de téléchargement. Il doit également préciser l'adresse de son terminal mobile (adresse MAC dans le cas d'un terminal Wifi) qu'il utilise dans le cadre de ce service.

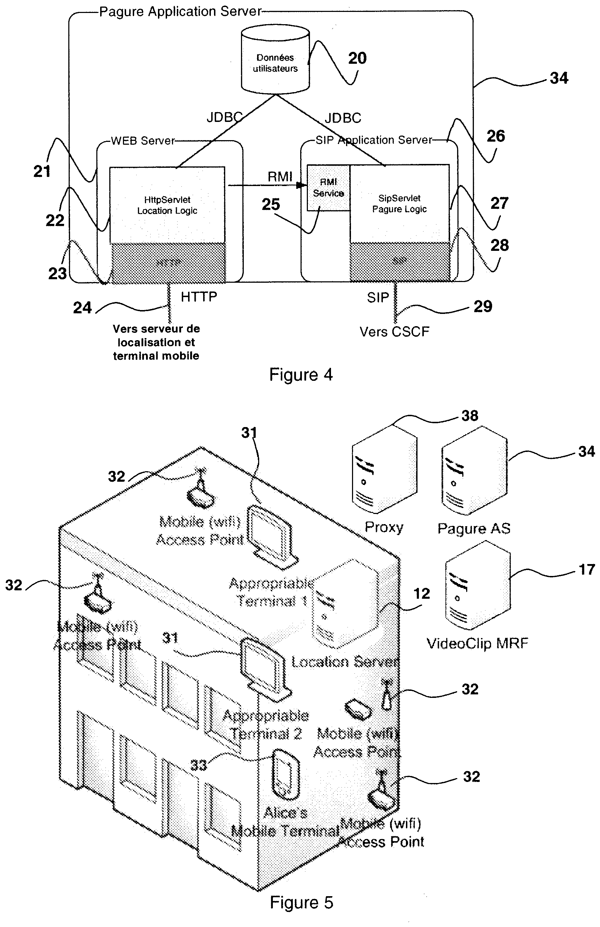

Le serveur d'application 34 d'appropriation mémorise une liste de zones auxquelles sont associés des terminaux contrôlables, notamment par SIP. Le serveur d'application 34 d'appropriation s'enregistre auprès du serveur de localisation pour obtenir des informations de présence comme le montre la figure 4. C'est-à-dire qu'à chaque changement des informations de présence (nouvel utilisateur (identifié par son adresse MAC) dans une zone, ou changement de zone, ...), le serveur de localisation préviendra le serveur d'application 34 d'appropriation de ce changement. Le serveur d'application 34 d'appropriation doit ensuite rechercher l'utilisateur associé à l'adresse MAC pour laquelle il a reçu un événement de présence et appliquer le traitement en fonction des états précédents selon des règles d'usages.

Comme illustré à la figure 4, le serveur d'application 34 d'appropriation est composé, notamment, de trois parties:
- Une interface 22 ("http Servlet") avec les moyens de localisation (du serveur de localisation, d'un serveur Web ou du terminal utilisateur), interface mise en oeuvre dans un serveur 21 tel qu'un serveur Web;
- Un serveur de gestion 26 ("SIP application serveur") des applications tel qu'un serveur d'application SIP pour la communication SIP et la logique d'usage;
- Une base 20 de données pour le stockage des données utilisateur.

Le serveur d'interface 22 "http Servlet" est apte à :
- Recevoir les messages d'information de localisation du serveur de localisation ou du module de localisation du terminal utilisateur.
- Vérifier s'il est indiqué de demander une confirmation de transfert à l'utilisateur (en se référant à la configuration du service dans la base de données de profil utilisateur).
- Si nécessaire, envoyer un message de demande de confirmation au terminal utilisateur
- Recevoir une réponse de confirmation
- Invoquer la fonction ou règle d'usage distante correspondante sur le serveur d'application 34 (lien avec RMI service 25 sur la figure 4);

Les fonctions disponibles sont notamment:
- L'utilisateur entre dans une zone
- L'utilisateur sort d'une zone
- L'utilisateur rentre chez lui
- L'utilisateur sort de chez lui

Une partie 27 du serveur d'application 34 ("Pagure Logic SipServlet") est responsable de la prise en charge de toutes les communications transférées (clip d'accueil, transfert de communication d'un/sur un terminal approprié, etc.)

Dans le cas où la localisation se fait par triangulation - lorsque la couverture Wifi est réalisée par plusieurs bornes 32, notamment dans le cadre entreprise - un serveur de localisation 12 (Location server) tel que celui de la figure 5 est utilisé pour déterminer avec précision la localisation de l'utilisateur. Une demande de confirmation de la part de l'utilisateur peut être mise en place pour confirmer ou non le changement de terminal. En effet si un utilisateur peut acquérir un équipement 31, un message de confirmation lui sera présenté sur son terminal afin qu'il valide cette acquisition.

Exemple de format de réponse à la vérification si une confirmation doit être demandée:
200 OK
HTTP headers...
Confirm=yes

Exemple de format de réponse de confirmation est de la forme:
POST http//terminalIPAddress:8080/Pagure/LocInfoServlet?confirmed=yes& macaddr=<macaddress>

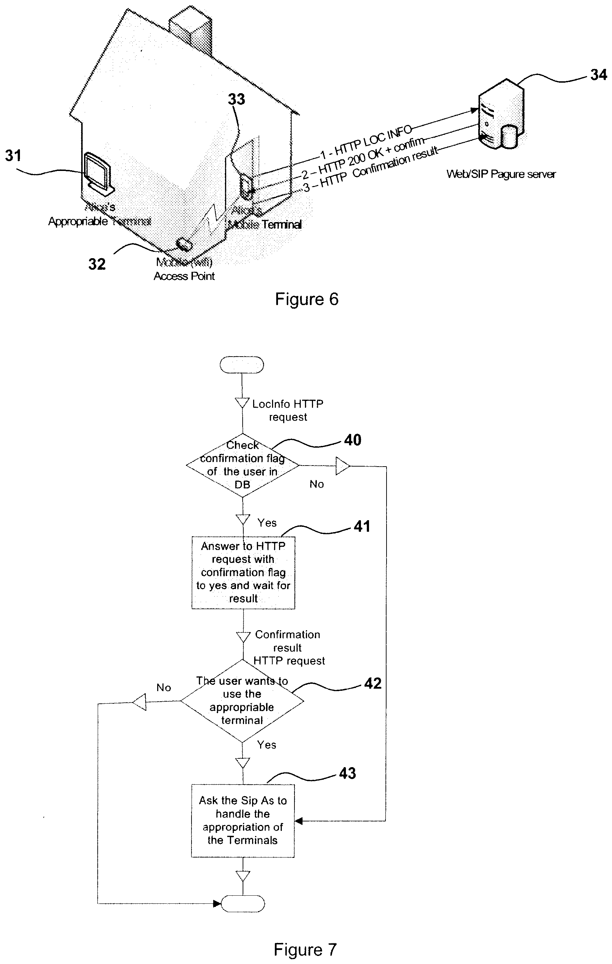

Dans le cas où la localisation ne peut pas être réalisée par triangulation, - généralement en cas d'utilisation d'une seule borne Wifi, notamment dans un cadre d'applications domestiques - le serveur de localisation présenté précédemment sera, comme le montre la figure 6, remplacé ici par le terminal mobile 33 du client qui aura pour rôle de déterminer sa proximité ou non de la borne wifi 32 et donc de l'équipement appropriable 31. Dans ce cas, seul un équipement 31 sera dit appropriable, et l'utilisateur pourra se l'approprier lorsqu'il se trouvera à proximité de cet équipement 31 (après validation de l'utilisateur). Il pourrait être envisagé de localiser le terminal mobile 33 de l'utilisateur par rapport à la borne Wifi 32 à l'aide de plusieurs valeurs de seuil: à chaque intervalle entre deux valeurs de seuil, un équipement donné associé à cet intervalle sera référencé comme appropriable.

Dans l'exemple illustré par la figure 6 qui montre le schéma global de communication entre le terminal utilisateur 33 et le serveur d'application 34 d'appropriation, la communication entre le terminal utilisateur et le serveur d'application 34 d'appropriation se fait en Wifi, il faut donc que le terminal mobile soit connecté au réseau domestique: la configuration se fait par le système d'exploitation du mobile.

Dans une variante de l'invention, le lancement de l'application d'appropriation déclenche l'envoi au serveur d'appropriation d'un message informant ce serveur que le terminal est "sorti": ceci signifie qu'il n'a aucun équipement qui lui soit approprié et qu'il n'est pas déclaré comme étant localisé dans une zone comportant un équipement, notamment un équipement appropriable que le terminal de l'utilisateur soit effectivement ou non dans une zone comportant un tel équipement.

Dans une variante de l'invention, la déconnexion du terminal utilisateur de l'application d'appropriation déclenche, quelle que soit la localisation du terminal par rapport à un équipement, l'envoi d'un message de sortie au serveur d'application 34 d'appropriation. Ainsi, cela permettra d'arrêter un clip en cours et d'empêcher de futurs transferts d'appels qui ne devraient pas avoir lieu.

Ce message de sortie est, notamment, de la forme:
http://adressePAGURE/pagure/LocInfoServlet?sphere=home&macaddr=00:01:0 2:03:04:05&action=out
où
- "adressePagure" est l'adresse du serveur d'application 34 d'appropriation
- "sphere=home": indique que l'utilisateur possède la version domestique (c'est-à-dire la localisation est effectuée par le terminal utilisateur) de l'application d'appropriation sur son terminal.
- "macaddr=00:01:02:03:04:05": correspond à l'adresse MAC du terminal mobile utilisé car il est possible d'avoir plusieurs terminaux mobiles communicant avec le serveur d'application 34 d'appropriation.
- "action=out": indique au serveur d'application 34 d'appropriation que l'utilisateur vient de sortir de la pièce.

Un utilisateur en possession de son terminal Wifi, notamment son téléphone mobile dans sa poche, entre dans une zone (ou pièce), par exemple chez lui, pièce comprenant un terminal dit appropriable (tel qu'une télévision). Le serveur de localisation envoie alors une alerte au serveur d'application 34 d'appropriation car le mobile a été détecté à proximité de ce terminal appropriable: le serveur d'application 34 d'appropriation attache alors la télévision au téléphone mobile. Dans une variante de l'invention, le serveur d'application 34 d'appropriation va être en charge de mettre en relation (après acceptation de l'utilisateur) le terminal de cette zone avec le serveur de clip afin d'accueillir l'utilisateur avec son clip préféré, tel que défini dans son profil, en le diffusant sur sa télévision. Cette phase d'accueil permet de signifier à l'utilisateur qu'il est en mesure d'utiliser cet équipement de communication pour ses besoins.

Par la suite, l'utilisateur, en possession de son terminal Wifi se trouvant dans une zone possédant un terminal dit appropriable, et lorsqu'une personne cherche à joindre cet utilisateur sur son mobile, son téléphone portable sonne, et lorsqu'il décroche, l'appel sera routé vers le terminal appropriable situé dans la zone dans laquelle l'utilisateur se trouve plutôt que sur son terminal. Le service d'appropriation permet ainsi d'enrichir la communication par établissement d'un flux Visio supplémentaire en utilisant la télévision. Dans ce cas, l'utilisateur va pouvoir bénéficier de l'affichage de l'image de son correspondant (si ce dernier possède un terminal Visio) sur sa télévision, et son correspondant pourra voir l'utilisateur sur son terminal Visio.

Dans la variante de l'invention comporte une phase d'accueil, si cet appel se produit pendant une phase d'accueil (lecture de son clip préféré), le serveur d'application 34 d'appropriation stoppe le clip serveur en question.

Par ailleurs si l'utilisateur est en communication avec un correspondant, en utilisant un terminal appropriable situé dans la zone, et souhaite quitter cette zone (par exemple si l'utilisateur décide de s'éloigner de sa télévision), les moyens de localisation (l'application cliente d'appropriation du terminal utilisateur dans le cas de la localisation par le terminal ou le serveur de localisation) détectent la sortie de la zone du terminal de l'utilisateur, un message étant envoyé au serveur d'application 34 d'appropriation pour l'informer de cette sortie. L'appel sera transféré du terminal appropriable (la télévision) de cette zone vers son terminal mobile (après acceptation de l'utilisateur), le service d'appropriation interrompant alors le flux vidéo établi avec la télévision et la communication se poursuivant sur le terminal mobile de l'utilisateur.

Et de même l'utilisateur en possession de son terminal Wifi est en communication Visio SIP avec un collègue, et entre dans une zone (ou pièce) possédant un terminal dit appropriable (par exemple si l'utilisateur toujours en communication sur son mobile, revient vers sa télévision), lorsque les moyens de localisation détectent l'utilisateur vient d'entrer dans la pièce, alors les moyens de localisation (soit du terminal soit du serveur de localisation suivant la variante de localisation) envoient une alerte au serveur d'application 34 d'appropriation, par exemple par message "http GET" sous la forme:
http://adressePAGURE/pagure/LocInfoServlet?sphere=home&macaddr=00:01:0 2:03:04:05&action=in
où
- sphere=home: indique que l'utilisateur possède la version Home de PAGURE sur son terminal.
- macaddr=00:01:02:03:04:05: correspond à l'adresse MAC du terminal mobile utilisé car nous pouvons avoir plusieurs terminaux mobiles communicant avec l'AS D'APPLICATION D'APPROPRIATION.
- action=in: indique au serveur D'APPLICATION D'APPROPRIATION que l'utilisateur vient de rentrer dans la pièce.

Le serveur d'application 34 d'appropriation détecte la présence du terminal et propose l'enrichissement de la communication sur la télévision. Par exemple, si le serveur répond avec un message contenant:
confirm=YES

Cela signifie que l'utilisateur est en communication sur son terminal mobile et qu'il faut alors afficher un message (un popup par exemple) sur le terminal mobile pour lui demander s'il accepte de transférer sa communication sur le terminal appropriable de la pièce. On envoie ensuite la réponse de l'utilisateur au serveur d'application 34 d'appropriation. Par un message "http GET" de la forme:
http://adressePAGURE/pagure/LocInfoServlet?confirmed=YES&macaddr=00:01: 02:03:04:05
où:
- "confirmed=YES": indique au serveur si l'utilisateur veut transférer son appel (YES) ou pas (NO).
- "macaddr=00:01:02:03:04:05": correspond à l'adresse MAC du terminal mobile utilisé.

Le serveur d'application 34 d'appropriation se charge alors de transférer l'appel en cours (notamment après acceptation de l'utilisateur) du terminal mobile de l'utilisateur vers le terminal appropriable de la zone. L'utilisateur peut ainsi continuer sa conversation Visio en utilisant un terminal plus adapté (grand écran, son stéréo, Visio 3D...), c'est-à-dire disposant de capacités de traitement ou de communication supérieures à celles de son terminal mobile.

Dans une variation de l'invention, tant que l'utilisateur sera dans la zone visitée, les moyens de localisation continueront à envoyer ces messages (par exemple "in request") à intervalle régulier (toutes les minutes par exemple) au serveur d'application 34 d'appropriation jusqu'à ce que l'utilisateur sorte de la pièce. Le serveur d'application 34 d'appropriation ne devra bien entendu pas répondre par un message *"confirm*=*YES"* à chaque message reçu. Ainsi, lorsque le serveur d'application 34 d'appropriation ne recevra plus ces messages d'entrée, cela signifiera qu'il y a une coupure réseau ou que l'utilisateur est probablement hors de la zone de couverture Wifi. Il pourra alors considérer que l'utilisateur est sorti de la pièce.

Si la personne avec laquelle l'utilisateur communique possède un terminal ayant des capacités 3D (2 flux média générés pour une vision 3D) et que le terminal de la pièce possède également cette caractéristique, alors la communication entre les 2 personnes pourra se faire en 3D.

Un utilisateur se trouve dans une zone dans laquelle il s'est approprié un terminal. Il peut alors utiliser ce terminal pour joindre un correspondant de façon transparente pour lui. En effet, pour son correspondant, l'appel sera émis de la part de l'utilisateur, c'est-à-dire que l'ID de l'équipement appelant présenté au correspondant est celui du terminal de l'utilisateur et non celui du terminal appropriable de cette zone qui est utilisé pour émettre l'appel.

De la même manière que précédemment, l'utilisateur peut bénéficier des capacités 3D du terminal appropriable de la pièce pour joindre un correspondant (si ce dernier possède bien entendu un équipement ayant les mêmes possibilités).

Dans une variante de l'invention, l'application d'appropriation sera, présentée sous forme d'icône sur l'écran du terminal utilisateur pour permettre l'utilisation d'un logiciel de téléphonie IP. Elle réapparaîtra pour afficher une demande de confirmation de transfert d'appel. Elle pourra indiquer à l'utilisateur sa présence dans la pièce et possédera une partie configuration. Dans une variante de l'invention, où au moins deux équipements sont disponibles dans la pièce, la demande de confirmation proposera à l'utilisateur de choisir, parmi les deux équipements, celui sur lequel le transfert doit être effectué.

Dans une variante de l'invention, l'application d'appropriation est configurée par saisie pour un terminal utilisateur d'une ou plusieurs bornes Wifi qu'elle utilisera pour déterminer la présence de ce terminal utilisateur. Dans un mode de réalisation, le choix de la borne Wifi se fait grâce à une liste déroulante présentant le nom des bornes et leur adresse MAC (ce qui permettrait de distinguer deux bornes portant le même nom). Ce choix est indépendant de la borne qui permet au terminal d'être connecté au réseau.

Dans une variante de l'invention, l'application d'appropriation est configurée par détermination d'une puissance seuil d'entrée. Dans un mode de réalisation particulier, comme ce seuil dépend beaucoup de l'environnement, l'application d'appropriation permet à l'utilisateur de l'ajuster. Par exemple, différents boutons sont affichés qui permettent de choisir 3 seuils différents (proche, moyen, éloigné) espacés de -5dBm par exemple. Ou bien, pour être encore plus précis, on peut mettre en place un champ numérique qui laisserait l'utilisateur entrer la valeur qu'il souhaite.

De la même manière, l'application d'appropriation est configurée par détermination d'une puissance seuil de sortie. Deux méthodes peuvent être mises à disposition:
- soit ajouter une valeur fixe de quelques décibels à la puissance d'entrée (-8 dBm par exemple). De cette manière même si la puissance d'entrée est modifiée, celle de sortie reste cohérente par rapport à l'entrée.
- soit ajouter un champ numérique dans le panneau de configuration de l'application.

Dans le cas d'une localisation par le terminal ces puissances configurent l'application client d'appropriation du terminal utilisateur.

En outre, les moyens de localisation (du terminal utilisateur ou du serveur de localisation) doivent être aptes à communiquer avec le serveur d'application 34 d'appropriation (par exemple par connaissance de son adresse).

La figure 7 illustre certains aspects du procédé d'appropriation selon l'invention. Il comporte la vérification de la localisation du terminal utilisateur, si l'utilisateur à changé de statut (entrée ou respectivement sortie de zone). Dans le cas où l'utilisateur a changé de statut, un mode de réalisation de l'invention prévoit qu'une confirmation est demandée 41 à l'utilisateur avant d'effectuer le transfert. Si l'utilisateur confirme 42, le serveur d'interface (http servlet), demande 43 au serveur d'application 34 d'appropriation de procéder à l'attachement (respectivement le détachement) de l'équipement au terminal utilisateur et au transfert. Si la localisation n'est pas confirmée, le terminal est considéré comme sorti de la zone et le serveur d'interface (http servlet) demande au serveur d'application 34 d'appropriation de prendre en charge le détachement de l'équipement du terminal utilisateur.

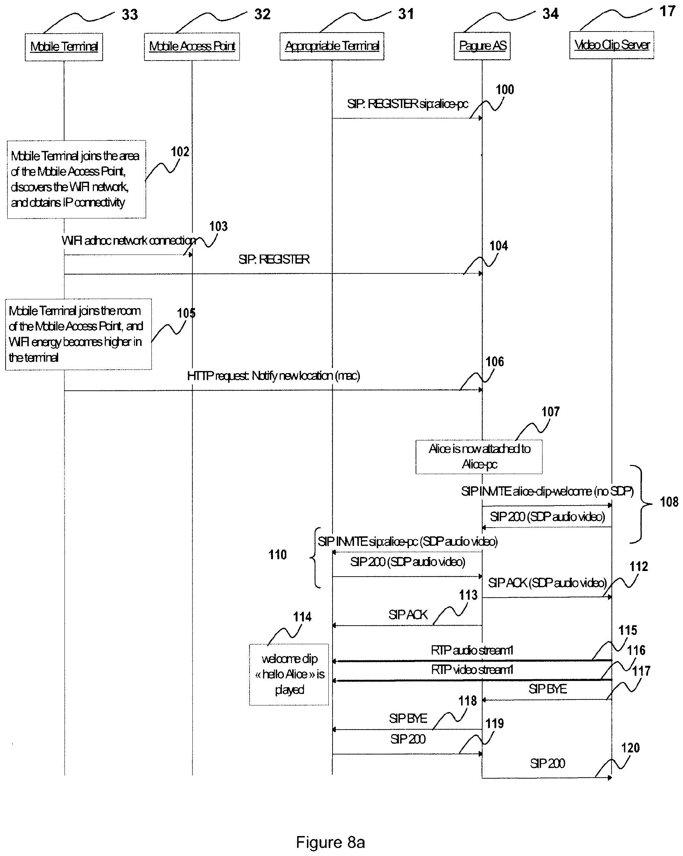

Les échanges représentés aux figures 8a, 8b, 9 à 14 ont lieu entre les entités suivantes:
- un terminal mobile 33 (SIP Mobile Terminal);
- un point d'accès Wifi 32 (Mobile Access Point);
- un terminal appropriable 31 (Appropriable Terminal);
- un serveur d'application 34 (Pagure AS)
- un terminal SIP 37 (SIP User B);
- un serveur de contenu 17 17 (Video Clip Server).

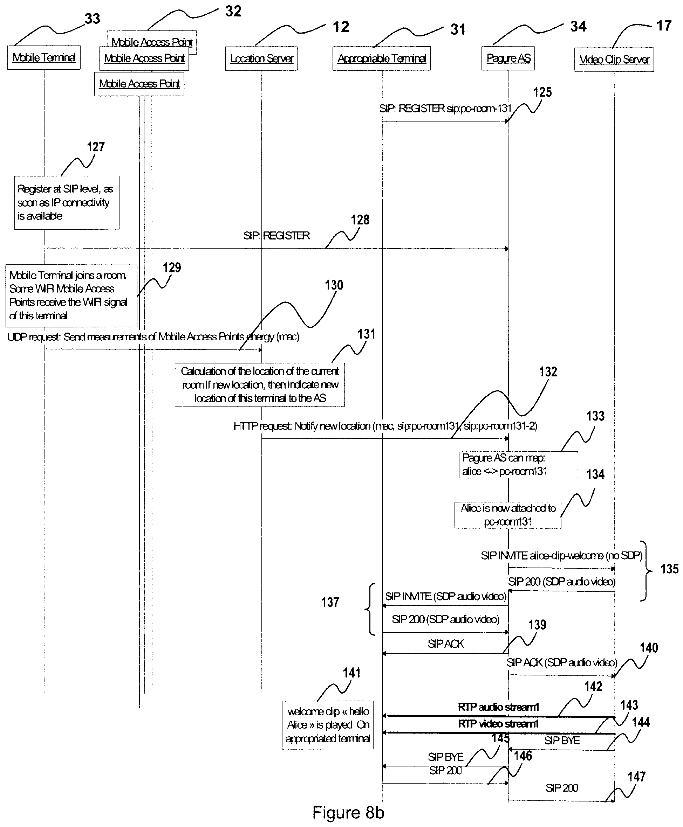

Les figures 8a et 8b illustrent les échanges entre le terminal utilisateur (mobile terminal), la borne Wifi (Mobile Access Point), l'équipement de la zone couverte par ladite borne (appropriable terminal), le serveur d'application 34 d'appropriation et, optionnellement, le serveur de clip (video clip server) lors de la phase d'appropriation, respectivement dans le cas (figure 8a) d'une localisation par le terminal utilisateur et dans le cas (figure 8b) d'une localisation par un serveur de localisation suivi éventuellement, comme déjà illustré, d'une phase d'accueil.

Les différentes phases d'échange représentées à la **figure 8a** dans le cas d'une localisation effectuée par le terminal utilisateur sont les suivantes:
- une phase d'enregistrement du terminal appropriable 31 auprès du serveur d'application 34, comprenant l'envoi 100 d'un message de type SIP REGISTER;
- une phase de connexion du terminal mobile 33 au point d'accès Wifi, comprenant, après entrée 102 dans la zone de couverture d'un point d'accès, un envoi 103 d'un message de connexion (WIFI adhoc network connection);
- une phase d'enregistrement du terminal mobile 33 auprès du serveur d'application 34, comprenant l'envoi 104 d'un message de type SIP REGISTER;
- une phase de modification 105 de la localisation du terminal mobile 33, dans laquelle le terminal mobile 33 émet 106 un message ("HTTP request Notify new Location") pour signaler sa localisation au serveur d'application 34 ; le serveur d'application 34 enregistre 107 alors le terminal mobile 33 comme étant attaché au terminal appropriable 31;
- une phase de mise en communication du terminal appropriable 31 et du serveur de contenu 17, comprenant une phase préalable de négociation de paramètres avec envoi de messages de type SIP INVITE et SIP 200 (et acquittements SIP ACK), échangés d'une part 110, 113 entre le serveur d'application 34 et le terminal appropriable 31, d'autre part 108, 112 entre le serveur d'application 34 et le serveur de contenu 17, cette phase de mise en communication aboutissant à l'établissement 115, 116 d'un flux audio ("RTP audio stream") et d'un flux vidéo ("RTP vidéo stream") entre le terminal appropriable 31 et le serveur de contenu 17, ces deux flux étant des flux sortant du serveur de contenu 17, ces flux utilisant les paramètres déterminés lors de la négociation; de cette manière un clip vidéo d'accueil peut être affiché sur le terminal appropriable 31;
- une phase de fin de communication (117 à 120) au cours de laquelle le lien SIP entre le serveur d'application 34 et le serveur de contenu 17 (messages SIP BYE) est interrompu, puis celui entre le serveur d'application 34 et le terminal appropriable 31 (messages SIP BYE).

Les différentes phases d'échange représentées à la **figure 8b** dans le cas d'une localisation effectuée par le serveur de localisation sont les suivantes:
- une phase d'enregistrement du terminal appropriable 31 auprès du serveur d'application 34, comprenant l'envoi 125 d'un message de type SIP REGISTER;
- une phase d'enregistrement 127 du terminal mobile 33 auprès du serveur d'application 34, comprenant l'envoi 128 d'un message de type SIP REGISTER; cette phase est exécutée dès que la connectivité IP est obtenue par le terminal mobile 33;

- une phase de localisation du terminal mobile 33, lors de laquelle, suite à une modification 129 de la localisation du terminal mobile 33, le terminal mobile 33 envoie 130 au serveur de localisation une requête UDP (UDP request: send measurements of Mobile Access Points energy) comprenant les valeurs de mesure des puissances d'émission reçues par le terminal mobile 33 pour les différents points d'accès; le serveur de localisation détermine 131 la localisation du terminal mobile 33 à partir de ces valeurs de mesure envoie 132 ensuite au serveur d'application 34 une requête pour informer le serveur d'application 34 de la localisation courante du terminal mobile 33 (HTTP request: Notify new location); à réception de cette requête, le serveur d'application 34 détermine 133 que le terminal mobile 33 se situe dans une zone donnée; le serveur d'application 34 enregistre 134 alors le terminal mobile 33 comme étant attaché au terminal appropriable 31;
- une phase de mise en communication (141-143), identique à celle de la figure 8a;
- une phase de fin de communication (144-147), identique à celle de la figure 8b.

Les figures 9 à 14 illustrent les échanges entre ces différents dispositifs dans le cas d'une localisation par le terminal utilisateur, respectivement:
- figure 9 : lors de l'entrée dans une zone avec équipement 31 avec une communication en cours
- figure 10: lors de l'établissement d'un appel en utilisant un équipement 31 d'une zone visitée
- figure 11: lors de la réception d'un appel en utilisant un équipement 31 d'une zone visitée
- figure 12: lors de la sortie d'une zone visitée
- figure 13: lors de la sortie d'une zone visitée avec une communication en cours
- figure 14: lors de la réception d'un appel alors que l'équipement 31 n'est pas disponible.

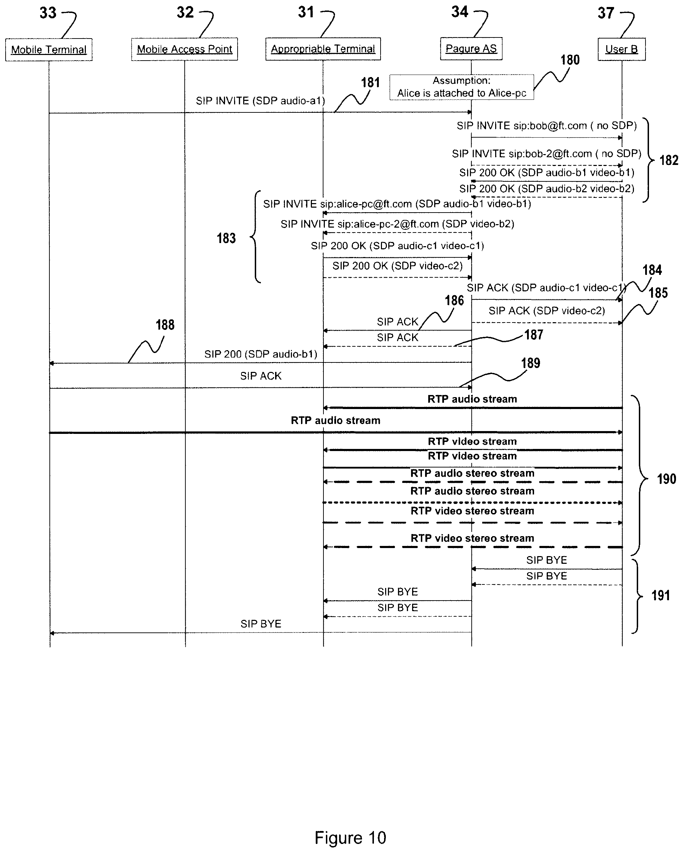

Dans les figures 10 à 14, les échanges sont décrits après la phase d'attachement. La phase d'attachement correspond soit à celle décrite en relation avec la figure 8a, soit à celle décrite en relation avec la figure 8b. Les échanges ayant lieu suite à cette phase d'attachement étant identiques quel que soit le mode de réalisation de la phase d'attachement de l'équipement au terminal.

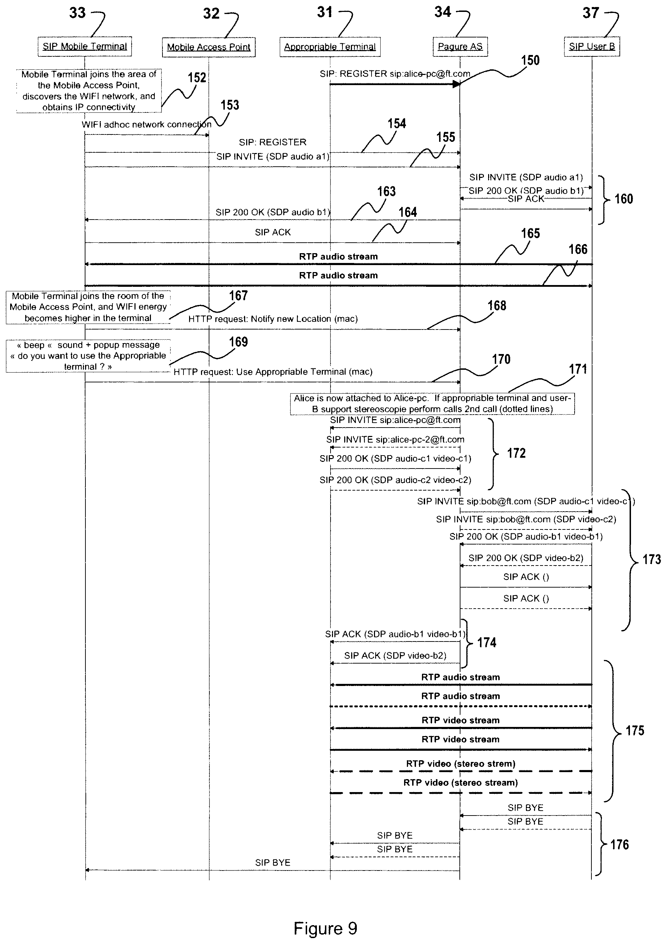

Les différentes phases d'échange représentées à la **figure 9** sont les suivantes:
- une phase d'enregistrement du terminal appropriable 31 auprès du serveur d'application 34, comprenant l'envoi 150 d'un message de type SIP REGISTER;
- une phase de connexion du terminal mobile 33 au point d'accès Wifi 32, comprenant, après entrée 152 dans la zone de couverture d'un point d'accès 32, un envoi 153 d'un message de connexion (WIFI adhoc network connection);
- une phase d'enregistrement du terminal mobile 33 auprès du serveur d'application 34, comprenant l'envoi 154 d'un message de type SIP REGISTER;
- une phase de mise en communication du terminal mobile 33 et du terminal 37, comprenant une étape d'envoi 155 d'une demande de mise en communication (SIP INVITE) puis une phase de négociation de paramètres avec envoi de messages de type SIP INVITE et SIP OK (et acquittements SIP ACK), échangés d'une part 163-164 entre le serveur d'application 34 et le terminal mobile 33, d'autre part 160 entre le serveur d'application 34 et le terminal 37, cette phase de négociation aboutissant à l'établissement 165-166 de deux flux audio (RTP audio stream) entre le terminal mobile 33 et le terminal 37, le premier flux étant un flux sortant du terminal 37 et entrant dans le terminal mobile 33, le deuxième flux étant un flux sortant du terminal mobile 33 et entrant dans le terminal 37, ces flux utilisant les paramètres déterminés lors de la négociation;
- une phase de modification 167 de la localisation du terminal mobile 33, à l'issue de laquelle le terminal mobile 33 émet 168 un message ("HTTP request Notify new Location") pour signaler sa localisation au serveur d'application 34 ;
- une phase de demande d'appropriation du terminal appropriable 31, dans laquelle le terminal mobile 33 émet 170 un message ("HTTP request Use Appropriable Terminal") pour demander l'utilisation du terminal appropriable 31, après confirmation 169 de l'utilisateur; le serveur d'application 34 enregistre 171 alors le terminal mobile 33 comme étant attaché au terminal appropriable 31;
- une phase de transfert de la communication établie entre le terminal mobile 33 et le terminal 37, comprenant une phase préalable de négociation avec envoi de messages de type SIP INVITE (et acquittements SIP ACK) lors de laquelle deux liens de signalisation sont établis: d'une part 172, 174 entre le serveur d'application 34 et le terminal appropriable 31, d'autre part 173 entre le serveur d'application 34 et le terminal 37; cette phase de négociation aboutit à l'établissement 175 de deux flux audio (RTP audio stream) entre le terminal appropriable 31 et le terminal 37, le premier flux étant un flux sortant du terminal 37 et entrant dans le terminal appropriable 31, le deuxième flux étant un flux sortant du terminal appropriable 31 et entrant dans le terminal 37; cette phase de négociation aboutit également à l'établissement de deux flux vidéo (RTP vidéo stream) entre le terminal appropriable 31 et le terminal 37, le premier flux étant un flux sortant du terminal 37 et entrant dans le terminal appropriable 31, le deuxième flux étant un flux sortant du terminal appropriable 31 et entrant dans le terminal 37; lorsque les terminaux 31 et 37 ont les capacités de mettre en oeuvre de la stéréoscopie, cette phase de négociation aboutit en outre à l'établissement de deux autres flux vidéo (RTP vidéo stereo stream) entre le terminal appropriable 31 et le terminal 37, le premier flux étant un flux sortant du terminal 37 et entrant dans le terminal appropriable 31, le deuxième flux étant un flux sortant du terminal appropriable 31 et entrant dans le terminal 37; les flux audio et vidéo ainsi établis utilisent les paramètres déterminés lors de la négociation;
- une phase 176 de fin de communication au cours de laquelle le lien SIP est interrompu entre le serveur d'application 34 et le terminal 37 (messages SIP BYE), puis entre le serveur d'application 34 et le terminal appropriable 31 (messages SIP BYE), et enfin entre le serveur d'application 34 et le terminal mobile 33 (messages SIP BYE); en d'autres termes, le lien de signalisation SIP est maintenu entre le serveur d'application 34 et le terminal mobile 33 pendant toute la durée de la communication établie entre les trois terminaux 31, 33 et 37, y compris après le transfert de certains flux utiles du terminal mobile 33 vers le terminal appropriable 31.

Dans cet exemple, tous les flux de données utiles, faisant partie de la communication, sont établis entre le terminal 31 et le terminal 37.

Les différentes phases d'échange représentées à la **figure 10** se déroulent après que le serveur d'application 34 ait enregistré 180 le terminal mobile 33 comme étant attaché au terminal appropriable 31; ces phases sont les suivantes:
- une étape initiale d'envoi 181 par le terminal mobile 33 au serveur d'application 34 d'une demande de mise en communication avec le terminal 37, cette demande étant envoyée sous forme de message SIP INVITE;
- une phase de mise en communication des trois terminaux 31, 33 et 37, comprenant une phase préalable de négociation de paramètres avec envoi de messages de type SIP INVITE et SIP OK (et acquittements SIP ACK), trois liens de signalisation étant établis: le premier 188, 189 entre le serveur d'application 34 et le terminal mobile 33, le deuxième 183, 186, 187 entre le serveur d'application 34 et le terminal appropriable 31 et le troisième 182, 184, 185 entre le serveur d'application 34 et le terminal 37; cette phase de mise en communication aboutit à l'établissement 190 de quatre flux audio (RTP audio stream) et de quatre flux vidéo (RTP video stream):
   - un premier flux audio sortant du terminal 37 et entrant dans le terminal appropriable 31
   - un deuxième flux audio sortant du terminal mobile 33 et entrant dans le terminal 37,
   - un premier flux vidéo sortant du terminal 37 et entrant dans le terminal appropriable 31,
   - un deuxième flux vidéo sortant du terminal appropriable 31 et entrant dans le terminal 37,
   - un troisième flux audio (flux stéréo associé au premier flux audio) sortant du terminal 37 et entrant dans le terminal appropriable 31,
   - un quatrième flux audio (flux stéréo associé au deuxième flux audio) sortant du terminal appropriable 31 et entrant dans le terminal 37,
   - un troisième flux vidéo (flux stéréo associé au premier flux vidéo) sortant du terminal appropriable 31 et entrant dans le terminal 37,
   - un quatrième flux vidéo (flux stéréo associé au deuxième flux vidéo) sortant du terminal 37 et entrant dans le terminal appropriable 31;
   les flux audio et vidéo ainsi établis utilisent les paramètres déterminés lors de la négociation; dans cet exemple, l'utilisateur du terminal mobile 33 continue d'utiliser ce terminal pour parler avec son correspondant utilisant le terminal 37 mais écoute ce que dit ce correspondant au moyen du terminal appropriable 31; l'utilisateur visualise la vidéo en provenance du terminal 37 sur le terminal appropriable 31 et transmet une vidéo à l'utilisateur du terminal 37 au moyen du terminal appropriable 31;
- une phase 191 de fin de communication au cours de laquelle le lien de signalisation SIP est interrompu entre le serveur d'application 34 et le terminal 37 (messages SIP BYE), puis entre le serveur d'application 34 et le terminal appropriable 31 (messages SIP BYE), et enfin entre le serveur d'application 34 et le terminal mobile 33 (messages SIP BYE); en d'autres termes, le lien de signalisation SIP entre le serveur d'application 34 et le terminal mobile 33 est maintenu pendant la durée de la communication établie entre les trois terminaux 31, 33 et 37.

Le fait de maintenir un lien de signalisation entre le terminal mobile 33 et le serveur d'application 34 lors de toute la durée de la communication permet à tout moment, en cours de communication, d'émettre à travers ce lien des commandes à destination du serveur d'application 34, respectivement de recevoir des commandes du serveur d'application 34. L'utilisateur du terminal mobile 33 conserve ainsi le contrôle du déroulement de la communication à partir de ce terminal mobile 33. Le terminal mobile 33 sert d'interface de commande pour le pilotage de la communication.

Ceci est utile pour une reprise de la communication par le terminal mobile 33, sur requête de l'utilisateur de ce terminal. Dans ce cas, les flux utiles établis avec le terminal appropriable 31 attaché au terminal mobile 33 sont transférés sur le terminal mobile 33, si les capacités du terminal le permettent et interrompus dans le cas contraire.

Le fait de maintenir un lien de signalisation entre le terminal mobile 33 et le serveur d'application 34 est également utile pour la transmission en cours de communication d'information à l'utilisateur A: par exemple pour lui notifier une autre demande de mise en communication, ou toute autre information.

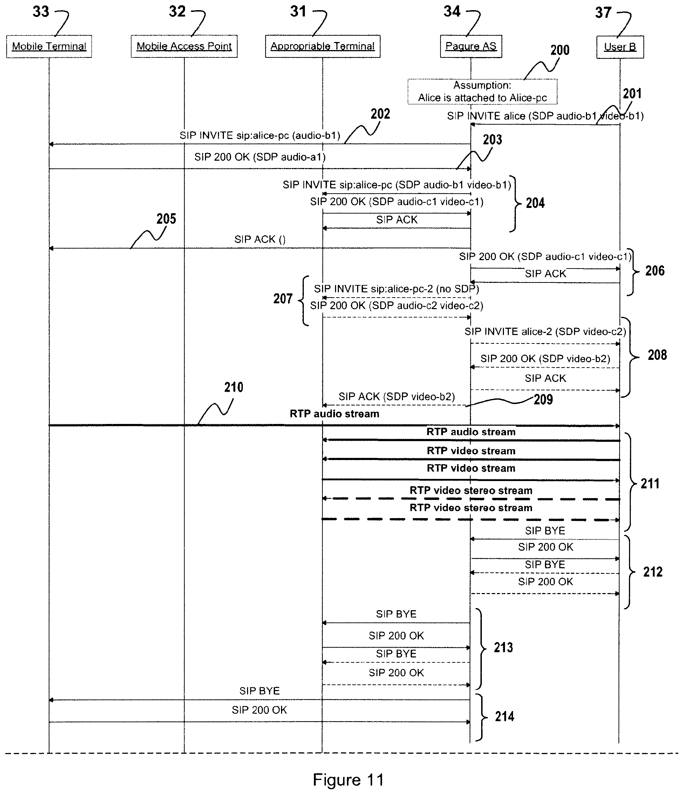

Le cas de la figure 11 est semblable à celui de la figure 10, avec la différence que la demande de mise en communication émane du terminal 37 et non du terminal mobile 33. La phase de négociation est menée comme pour le cas de la figure 10 par le serveur d'application 34 qui établit avec chacun des terminaux 33, 31 et 37 un lien de signalisation. Cette phase de négociation aboutit dans l'exemple représenté à la figure 11, à l'établissement 211 de deux flux audio (les deux premiers flux décrits pour la figure 10) et de quatre flux vidéo (les quatre flux vidéo décrits pour la figure 10), à savoir:
- un premier flux audio sortant du terminal mobile 33 et entrant dans le terminal 37,
- un deuxième flux audio sortant du terminal 37 et entrant dans le terminal appropriable 31,
- un premier flux vidéo sortant du terminal 37 et entrant dans le terminal appropriable 31,
- un deuxième flux vidéo sortant du terminal appropriable 31 et entrant dans le terminal 37,
- un troisième flux vidéo (flux stéréo associé au premier flux vidéo) sortant du terminal 37 et entrant dans le terminal appropriable 31,
- un quatrième flux vidéo (flux stéréo associé au deuxième flux vidéo) sortant du terminal appropriable 31 et entrant dans le terminal 37.

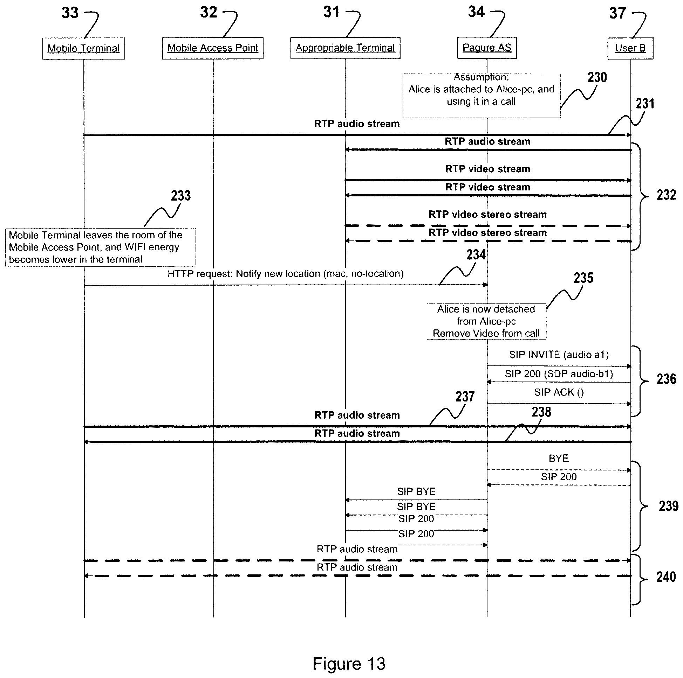

Le cas illustré par la **figure 13** correspond à un cas de sortie d'une zone visitée avec une communication en cours. Les différentes phases d'échange représentées à la **figure 13** se déroulent après que le serveur d'application 34 ait enregistré 230 le terminal mobile 33 comme étant attaché au terminal appropriable 31 et sont les suivantes:
- une première phase de communication entre les trois terminaux 31, 33 et 37 dans laquelle les flux de données utiles couramment établis 231, 232 sont les suivants :
   - un premier flux audio sortant du terminal mobile 33 et entrant dans le terminal 37,
   - un deuxième flux audio sortant du terminal 37 et entrant dans le terminal appropriable 31,
   - un premier flux vidéo sortant du terminal appropriable 31 et entrant dans le terminal 37,
   - un deuxième flux vidéo sortant du terminal 37 et entrant dans le terminal appropriable 31,
   - un troisième flux vidéo (flux stéréo associé au premier flux vidéo) sortant du terminal appropriable 31 et entrant dans le terminal 37,
   - un quatrième flux vidéo (flux stéréo associé au deuxième flux vidéo) sortant du terminal 37 et entrant dans le terminal appropriable 31,
   dans cet exemple, l'utilisateur du terminal mobile 33 utilise le terminal mobile 33 pour parler avec son correspondant utilisateur du terminal 37, mais écoute ce que dit ce correspondant au moyen du terminal appropriable 31; l'utilisateur visualise la vidéo en provenance du terminal 37 sur le terminal appropriable 31 et transmet une vidéo à l'utilisateur du terminal 37 au moyen du terminal appropriable 31;
- une phase de modification 233 de la localisation du terminal mobile 33, dans laquelle le terminal mobile 33 émet 234 un message ("HTTP request Notify new Location") pour signaler sa localisation au serveur d'application 34 ; le terminal mobile 33 étant en dehors de la zone d'appartenance du terminal appropriable 31, le serveur d'application 34 enregistre 235 le terminal mobile 33 comme étant détaché du terminal appropriable 31;
- une phase de transfert du deuxième flux audio, par établissement d'un nouveau flux audio sortant du terminal 37 et entrant dans le terminal mobile 33, comprenant une phase préalable de négociation lors de laquelle le serveur d'application 34 transmet 236 au terminal 37 à travers le lien de signalisation un message de type SIP INVITE; cette phase de négociation aboutit à l'établissement 237, 238 du nouveau flux audio (RTP audio stream) entre le terminal 37 et le terminal mobile 33, le premier flux audio 231, 237 n'étant pas affecté par ce transfert; le nouveau flux audio ainsi établi utilise les paramètres déterminés lors de la négociation;
- une phase 239 de fin de communication au cours de laquelle le lien de signalisation SIP entre le serveur d'application 34 et le terminal appropriable 31 (messages SIP BYE) est interrompu, ainsi que tous les flux de données utiles entrant ou sortant du terminal appropriable 31;
A l'issue de ces différentes phases, l'utilisateur du terminal mobile 33 dialogue 240 avec l'utilisateur du terminal 37, sans échanger de flux vidéo.

Dans ce cas également, le lien de signalisation entre le terminal mobile 33 et le serveur d'application 34 est maintenu pendant toute la durée de la communication.

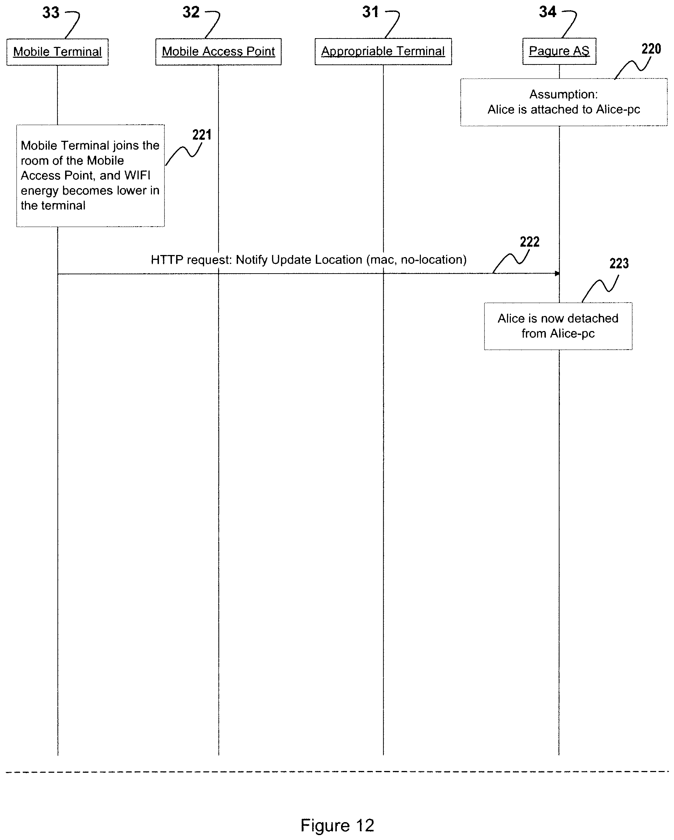

Le cas de la figure 12 correspond à la phase de modification de la localisation du terminal mobile 33, décrite par référence à la figure 13, suite à laquelle, le terminal mobile 33 sortant 221 en dehors de la zone d'appartenance du terminal appropriable 31, le serveur d'application 34 enregistre 223 le terminal mobile 33 comme étant détaché du terminal appropriable 31, après réception 222 d'une requête HTTP (http request: notify Update Location) signalant la nouvelle localisation du terminal mobile 33.

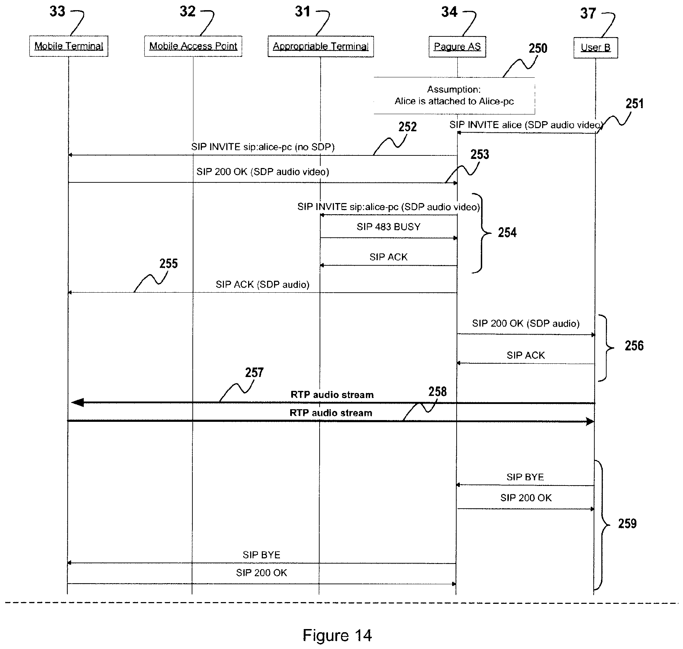

Le cas de la figure 14 correspond à celui de la réception d'un appel alors que le terminal appropriable 31 n'est pas disponible. Les échanges se déroulent après que le serveur d'application 34 ait enregistré 250 le terminal mobile 33 comme étant attaché au terminal appropriable 31. Le déroulement des phases est identique au cas illustré au regard de la figure 11 (réception d'un appel sur le terminal mobile 33) avec les différences suivantes:
- à réception de la demande 251 de mise en communication en provenance du terminal 37, le seveur d'application transmet 252 la demande au terminal mobile 33 puis tente d'établir 254 une communication avec le terminal appropriable 31, reçoit un message de type SIP BUSY indiquant que ce terminal est occupé, une communication est finalement établie 257, 258 entre le terminal mobile 33 et le terminal 37, les flux utiles établis étant les suivants:
   - un premier flux audio sortant du terminal 37 et entrant dans le terminal mobile 33,
   - un deuxième flux audio sortant du terminal mobile 33 et entrant dans le terminal 37,
   les flux audio ainsi établis utilisent les paramètres déterminés lors de la phase préalable de négociation (252, 253, 255, 256).
- une phase 259 de fin de communication au cours de laquelle le lien de signalisation SIP entre le serveur d'application 34 et le terminal 37 (messages SIP BYE) est interrompu, puis le lien de signalisation SIP entre le serveur d'application 34 et le terminal mobile 33.

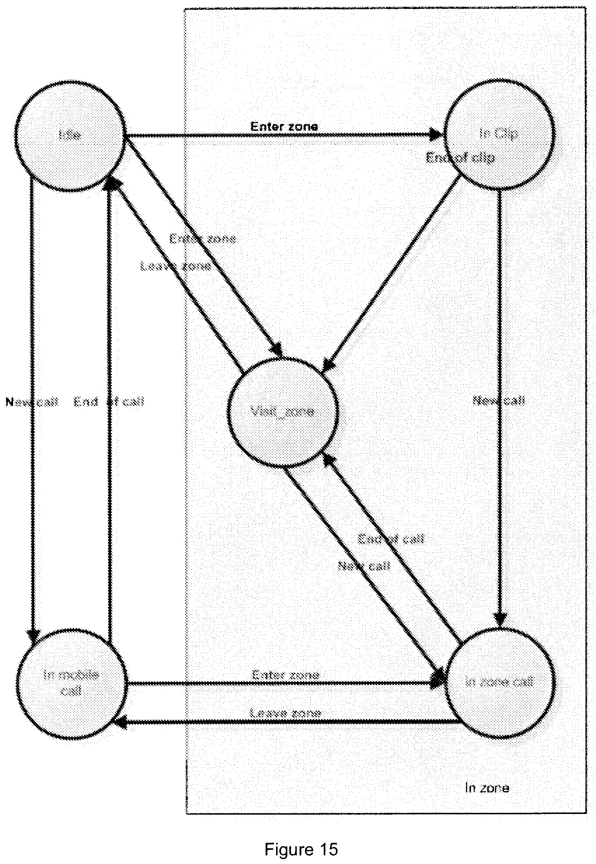

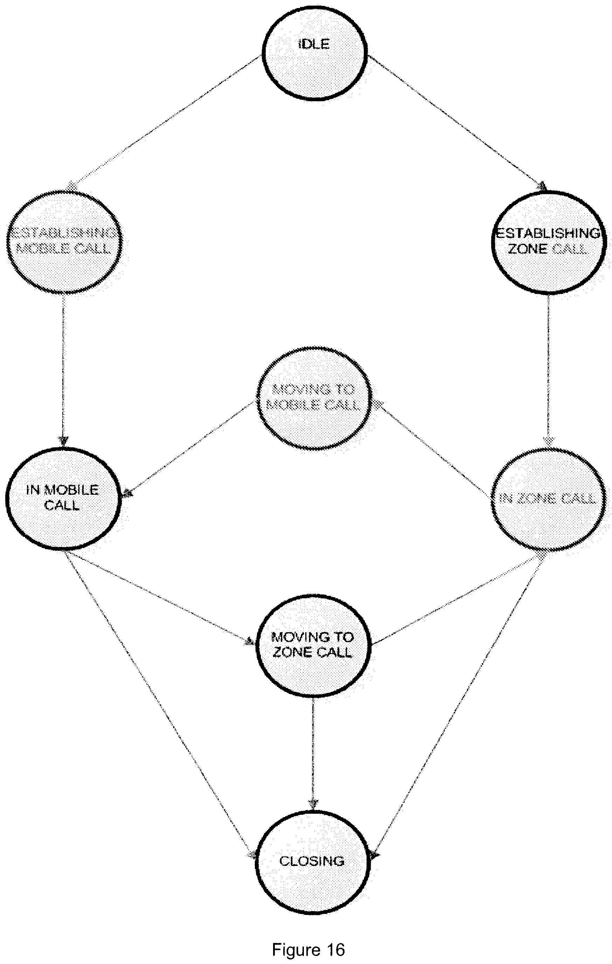

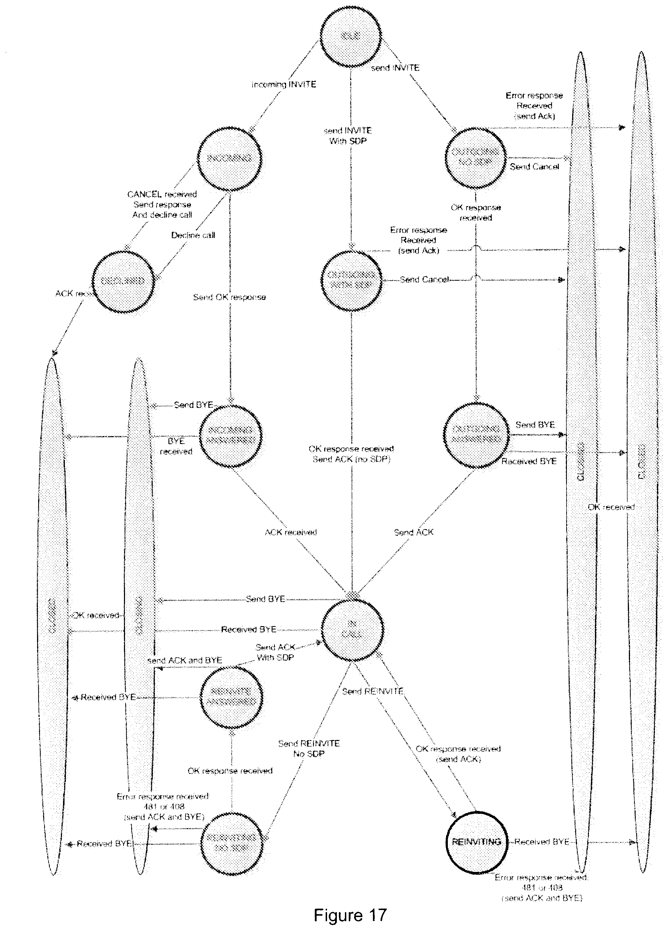

La logique de l'appropriation peut être divisée en trois parties mis en oeuvre par trois machines à états illustrées par les figures 15, 16 et 17, correspondant respectivement à la machine à état du terminal utilisateur, la machine à état "half call" et la machine à état "call leg".

Les exemples précédents illustrent l'appropriation d'un équipement par un terminal pour des applications de communication. Ce mécanisme est aussi utilisable pour l'exécution d'une application de communication autre qu'une session d'appel, par exemple pour la présentation de données stockées dans le terminal utilisateur ou de données diffusées reçues par ce terminal, exécution d'un jeux en ligne ou non à partir du terminal utilisateur sur l'équipement, etc.

En outre, les exemples donnés ici illustrent l'appropriation d'un équipement multimédia par un terminal utilisateur pour y transférer la totalité d'une application de communication avec un équipement distant: par exemple une communication en visiophonie entre un terminal mobile et cet équipement distant est transférée sur un ordinateur comportant les interfaces: écran, hauts- parleurs, micro et webcam, etc, et qui établit un lien de communication avec l'équipement distant.

L'invention permet aussi de transférer seulement une partie de l'application de communication, en particulier la partie correspondant au traitement et à la réception des flux entrants d'une communication par la présentation de la vidéo et de l'audio entrant sur la télévision (écran et hauts parleurs) et de conserver la partie correspondant au traitement et à l'émission des flux sortants de la communication sur le terminal utilisateur (utilisation du micro et de la caméra du terminal mobile utilisateur).

De plus, l'invention permet de transférer une partie d'une application de communication sur un premier équipement tel qu'écran de projection 3D (vidéo entrante d'une communication Visio 3D par exemple), et une autre partie de l'application de communication sur un autre équipement tel qu'une caméra de capture 3D, l'entrée et la sortie sonore restant sur le terminal mobile de l'utilisateur.

En généralisant, l'invention vise un procédé d'appropriation dynamique d'au moins un deuxième équipement multimédia par un premier équipement situé dans une zone géographique prédéfinie comportant ledit au moins un deuxième équipement multimédia, ledit procédé d'appropriation comportant un attachement dudit deuxième équipement multimédia audit premier équipement de telle sorte qu'une exécution d'au moins une partie d'au moins une application dudit premier équipement soit transférée sur ledit au moins un deuxième équipement multimédia.

Selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données d'un serveur et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur ou processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon une autre implémentation, l'invention est mise en oeuvre au moyen de composants logiciels et/ou matériels. Dans cette optique, le terme module peut correspondre dans ce document aussi bien à un composant logiciel ou qu'à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions. Un composant matériel correspond à tout élément d'un ensemble matériel (ou hardware) apte à mettre en oeuvre une fonction ou un ensemble de fonctions.

## Revendications

1. Procédé d'appropriation dynamique d'au moins un deuxième équipement multimédia (31) constituant un deuxième terminal multimédia par un premier équipement (33) constituant un premier terminal aussi nommé terminal utilisateur situé dans une zone géographique dans laquelle se situe ledit au moins un deuxième terminal multimédia, en cas de demande d'établissement d'une communication entre le premier terminal (33) et un troisième terminal (37), le procédé d'appropriation dynamique utilisant des capacités du deuxième terminal multimédia approprié par le premier terminal lors de la communication avec le troisième terminal, le procédé comportant
- une étape d'établissement d'un premier lien de signalisation entre un serveur (34) et le premier terminal (33),
- une étape de pilotage des deuxième et troisième terminaux à partir dudit serveur (34) en vue d'un établissement, entre les deuxième et troisième terminaux, d'au moins un premier flux de données utiles, formant une première partie de ladite communication.

2. Procédé selon la revendication 1, le procédé comportant une étape de pilotage des premier et troisième terminaux à partir dudit serveur (34) en vue d'un établissement, entre les premier et troisième terminaux, d'au moins un deuxième flux de données utiles, formant une deuxième partie de ladite communication.

3. Procédé selon la revendication 1 ou 2, dans lequel le premier lien de signalisation est maintenu pendant ladite communication.

4. Procédé selon la revendication 1, dans lequel un identifiant d'terminal est présenté au troisième terminal (37) lors de l'établissement du premier flux de données utiles, cet identifiant étant celui du premier terminal (33).

5. Procédé selon la revendication 1, dans lequel ledit au moins un premier flux est établi initialement entre le premier terminal (33) et le troisième terminal (37), puis transféré entre le deuxième terminal multimédia (31) et le troisième terminal (37), suite à l'entrée du premier terminal (33) dans ladite zone géographique.

6. Procédé selon la revendication 1, dans lequel ledit au moins un premier flux est établi initialement entre le deuxième terminal multimédia (31) et le troisième terminal (37), puis transféré entre le premier terminal (33) et le troisième terminal (37), suite à la sortie du premier terminal (33) dans ladite zone géographique.

7. Serveur (34) d'application d'appropriation dynamique d'au moins un deuxième équipement multimédia (31) constituant un deuxième terminal par un premier équipement (33) constituant un premier terminal aussi nommé terminal utilisateur situé dans une zone géographique dans laquelle se situe ledit au moins un deuxième équipement multimédia, en cas de demande d'établissement d'une communication entre le premier équipement (33) et un troisième équipement (37), le serveur d'appropriation dynamique (34) utilisant des capacités du deuxième terminal multimédia approprié par le premier terminal lors de la communication avec le troisième terminal, le serveur (34) comportant
- des moyens d'établissement d'un premier lien de signalisation entre un serveur (34) et le premier terminal (33),
- des moyens de pilotage des deuxième et troisième terminaux en vue d'un établissement, entre les deuxième et troisième terminaux, d'au moins un premier flux de données utiles, formant une première partie de ladite communication.

8. Serveur selon la revendication 7 comprenant des moyens de pilotage des premier et troisième terminaux en vue d'un établissement, entre les premier et troisième terminaux, d'au moins un deuxième flux de données utiles, formant une deuxième partie de ladite communication.

9. Programme informatique comprenant des instructions logicielles pour la mise en oeuvre d'un procédé selon l'une des revendications 1 à 6 lorsque ledit programme est exécuté par un processeur de données.

10. Support d'enregistrement lisible par un processeur de données sur lequel est enregistré un programme comprenant des instructions de code de programme pour l'exécution des étapes d'un procédé selon l'une des revendications 1 à 6.

## Patentansprüche

1. Verfahren zur dynamischen Verwendung mindestens eines zweiten Multimedia-Gerätes (31), das ein zweites Multimedia-Endgerät bildet, durch ein erstes Gerät (33), das ein erstes Endgerät bildet, das auch Benutzerendgerät genannt wird, das in einem geographischen Gebiet angeordnet ist, in dem sich das mindestens eine zweite Multimedia-Endgerät befindet, im Falle einer Anfrage des Aufbauens einer Kommunikation zwischen dem ersten Endgerät (33) und einem dritten Endgerät (37), wobei das Verfahren zur dynamischen Verwendung Kapazitäten des zweiten Multimedia-Endgerätes nutzt, das durch das erste Endgerät während der Kommunikation mit dem dritten Endgerät angeeignet wird, wobei das Verfahren aufweist
- einen Schritt des Aufbauens einer ersten Signalisierungsverbindung zwischen einem Server (34) und dem ersten Endgerät (33),
- einen Schritt des Steuerns des zweiten und dritten Endgeräts ausgehend von dem Server (34), um zwischen dem zweiten und dritten Endgerät mindestens einen ersten Nutzdatenstrom aufzubauen, der einen ersten Teil der Kommunikation bildet.

2. Verfahren nach Anspruch 1, wobei das Verfahren aufweist ein Schritt des Steuerns des ersten und dritten Endgeräts ausgehend von dem Server (34), um zwischen dem ersten und dritten Endgerät mindestens einen zweiten Nutzdatenstrom aufzubauen, der einen zweiten Teil der Kommunikation bildet.

3. Verfahren nach Anspruch 1 oder 2, wobei die erste Signalisierungsverbindung während der Kommunikation aufrechterhalten wird.

4. Verfahren nach Anspruch 1, wobei eine Endgerätkennung dem dritten Endgerät (37) bei dem Aufbauen des ersten Nutzdatenstroms präsentiert wird, wobei diese Kennung jene des ersten Endgerätes (33) ist.

5. Verfahren nach Anspruch 1, wobei der mindestens eine erste Strom zuerst zwischen dem ersten Endgerät (33) und dem dritten Endgerät (37) aufgebaut wird und dann zwischen dem zweiten Multimedia-Endgerät (31) und dem dritten Endgerät (37) infolge des Eintretens des ersten Endgeräts (33) in das geographische Gebiet übertragen wird.

6. Verfahren nach Anspruch 1, wobei der mindestens eine erste Strom zuerst zwischen dem zweiten Multimedia-Endgerät (31) und dem dritten Endgerät (37) aufgebaut wird und dann zwischen dem ersten Endgerät (33) und dem dritten Endgerät (37) infolge des Heraustretens des ersten Endgeräts (33) aus dem geographischen Gebiet übertragen wird.

7. Server (34) zum Anwenden einer dynamischen Verwendung von mindestens einem zweiten Multimedia-Gerät (31), das ein zweites Endgerät bildet, durch ein erstes Gerät (33), das ein erstes Endgerät bildet, das auch Benutzerendgerät genannt wird, das sich in einem geographischen Gebiet befindet, in dem sich das mindestens eine zweite Multimedia-Gerät befindet, im Falle einer Anfrage des Aufbauens einer Kommunikation zwischen dem ersten Gerät (33) und einem dritten Gerät (37), wobei der Server zur dynamischen Verwendung (34) Kapazitäten des zweiten Multimedia-Endgerätes nutzt, das durch das erste Endgerät während der Kommunikation mit dem dritten Endgerät angeeignet wird, wobei der Server (34) aufweist
- Mittel zum Aufbauen einer ersten Signalisierungsverbindung zwischen einem Server (34) und dem ersten Endgerät (33),
- Mittel zum Steuern des zweiten und dritten Endgeräts, um zwischen dem zweiten und dritten Endgerät mindestens einen ersten Nutzdatenstrom aufzubauen, der einen ersten Teil der Kommunikation bildet.

8. Server nach Anspruch 7, umfassend Mittel zum Steuern des ersten und dritten Endgeräts, um zwischen dem ersten und dritten Endgerät mindestens einen zweiten Nutzdatenstrom aufzubauen, der einen zweiten Teil der Kommunikation bildet.

9. Computerprogramm, das Softwareanweisungen für das Umsetzen eines Verfahrens nach einem der Ansprüche 1 bis 6 aufweist, wenn das Programm von einem Datenprozessor ausgeführt wird.

10. Datenprozessorlesbares Aufzeichnungsmedium, auf dem ein Programm aufgezeichnet ist, das Programmcodeanweisungen für die Ausführung der Schritte eines Verfahrens nach einem der Ansprüche 1 bis 6 aufweist.

## Claims

1. Method for the dynamic appropriation of at least one second multimedia device (31) constituting a second multimedia terminal by a first device (33) constituting a first terminal, also called user terminal, situated in a geographical zone in which said at least one second multimedia terminal is situated, in the event of a request to establish communication between the first terminal (33) and a third terminal (37), the dynamic appropriation method using capabilities of the second multimedia terminal appropriated by the first terminal during communication with the third terminal, the method including
- a step of establishing a first signalling link between a server (34) and the first terminal (33),
- a step of controlling the second and third terminals from said server (34) for the purpose of establishing, between the second and third terminals, at least a first flow of payload data, forming a first part of said communication.

2. Method according to Claim 1, the method including a step of controlling the first and third terminals from said server (34) for the purpose of establishing, between the first and third terminals, at least a second flow of payload data, forming a second part of said communication.

3. Method according to Claim 1 or 2, wherein the first signalling link is maintained during said communication.

4. Method according to Claim 1, wherein a terminal identifier is presented to the third terminal (37) when the first flow of payload data is established, this identifier being the one of the first terminal (33).

5. Method according to Claim 1, wherein said at least one first flow is initially established between the first terminal (33) and the third terminal (37), and then transferred between the second multimedia terminal (31) and the third terminal (37), following the entry of the first terminal (33) into said geographical zone.

6. Method according to Claim 1, wherein said at least one first flow is initially established between the second multimedia terminal (31) and the third terminal (37), and then transferred between the first terminal (33) and the third terminal (37), following the exit of the first terminal (33) from said geographical zone.

7. Application server (34) for the dynamic appropriation of at least one second multimedia device (31) constituting a second terminal by a first device (33) constituting a first terminal, also called user terminal, situated in a geographical zone in which said at least one second multimedia device is situated, in the event of a request to establish communication between the first device (33) and a third device (37), the dynamic appropriation server (34) using capabilities of the second multimedia terminal appropriated by the first terminal during communication with the third terminal, the server (34) including
- means for establishing a first signalling link between a server (34) and the first terminal (33),
- means for controlling the second and third terminals for the purpose of establishing, between the second and third terminals, at least a first flow of payload data, forming a first part of said communication.

8. Server according to Claim 7, comprising means for controlling the first and third terminals for the purpose of establishing, between the first and third terminals, at least a second flow of payload data, forming a second part of said communication.

9. Computer program comprising software instructions for implementing a method according to one of Claims 1 to 6 when said program is executed by a data processor.

10. Recording medium able to be read by a data processor and recorded on which is a program comprising program code instructions for executing the steps of a method according to one of Claims 1 to 6.
